# EUROPÄISCHE PATENTANMELDUNG

(11) **EP 2 740 866 A2**
(43) Veröffentlichungstag der Anmeldung: **11.06.2014**
(21) Anmeldenummer: 13192397.1
(22) Anmeldetag: 11.11.2013
(51) Int. Cl.: E05C 9/06, E05C 9/00, E05B 17/00

(54) **Verfahren zur Montage von Beschlagelementen**

(30) Priorität: 06.12.2012 DE 102012111858
(71) Anmelder: PaX AG, 55218 Ingelheim (DE)
(72) Erfinder: Struth, Fritz, 55218 Ingelheim (DE)
(74) Vertreter: Müller, Jochen

(57) **Zusammenfassung**

Bei einem Verfahren zur Montage von Beschlagelementen (1) an einem Flügelrahmen eines Fensters oder einer Tür, der im Wesentlichen aus Eckumlenkungen (6) und Längsteilen (4) zusammengesetzt ist, die jeweils mindestens eine Stulpschiene (11) umfassen, an der eine Schließzapfen (10) tragende Treibstange (9) gelagert ist, wobei benachbarte Treibstangen (9) miteinander und zu ihrer Verlagerung mit einer Griffolive (2) gekoppelt werden, wird zumindest an einer definierten End-Position, die in der einen und/oder anderen Umlaufrichtung am weitesten von der Griffolive (2) entfernt ist, ein Anschlag (17) für die Stulpschiene (11) und/oder die Treibstange (9) und/oder den Schließzapfen (10) gesetzt.

## Beschreibung

Die Erfindung bezieht sich auf ein Verfahren zur Montage von Beschlagelementen an einem Flügelrahmen eines Fensters, der im Wesentlichen aus Eckumlenkungen und Längsteilen zusammengesetzt ist, die jeweils mindestens eine Stulpschiene umfassen, an der eine Schließzapfen tragende Treibstange gelagert ist, wobei benachbarte Treibstangen miteinander und zu ihrer Verlagerung mit einem Getriebe gekoppelt werden, und ein Beschlagelement für einen Flügelrahmen eines Fensters mit einer an einer Stulpschiene verschiebbaren Treibstange.

In der Praxis werden eine Vielzahl von Fenstern mit individuellen Maßen gefertigt, weshalb auch die Beschläge der Flügelrahmen in einer Art Baukastensystem bereitgestellt werden. Hierbei finden Beschlagelemente mit einer konstanten Länge Verwendung und solche Beschlagelemente, die in Ihrer Länge individuell zugeschnitten werden. Die Beschlagelemente mit konstanter Länge werden in unterschiedlichen Rastermaßen bereitgestellt und in Abhängigkeit von den Maßen des Flügelrahmens ausgewählt. Vor der Montage liegt der fertige Flügelrahmen vor, zu dem auch ein Blendrahmen existiert, wobei die Positionen von Schließteilen am Blendrahmen anhand eines Bezugspunktes, der üblicherweise einer Ecke des Rahmens zugeordnet ist, festgelegt sind. Bei der Montage der Beschlagelemente stellen Eckumlenkungen fixe Bauteile dar, da sie von den Monteuren in der Regel fest an eine Ecke des Flügelrahmens angedrückt und verschraubt werden. An jeder Eckumlenkung wird normalerweise ein Längsteil angeschlossen. Die Eckumlenkung und das Längsteil sind jeweils im Wesentlichen aus einer Stulpschiene und einer daran verschiebbar gelagerten Treibstange zusammengesetzt, wobei an der Treibstange Schließzapfen angeordnet sind, die zur Verriegelung des Flügelrahmens gegenüber dem Blendrahmen mit den blendrahmenseitigen Schließteilen derart zusammenwirken, dass sie in Nuten der Schließteile eintauchen. Um die Treibstangen durch eine Verdrehung eines Griffelementes über ein Getriebe der Beschlagelemente zu verschieben, sind die Treibstangen an Verbindungsstellen mittels lösbarer Verzahnungen miteinander verbunden.

Als problematisch stellen sich die relativ großen Längentoleranzen, mit denen die Beschlagelemente gefertigt werden, die stufenweise bzw. zahnweise Verschiebung der Verzahnungen im Bereich der Verbindungsstellen sowie Ungenauigkeiten bei der Montage dar, die insgesamt dazu führen, dass insbesondere entfernt zu einer Griffolive vorhandene Schließzapfen gegenüber ihrer Normal- bzw. Soll-Position, in der sie eine Ideallage zu dem Schließteil des Blendrahmens einnehmen, in die eine oder andere Richtung verlagert sind, sodass in der einen Extremlage die Griffolive nicht in eine exakte "Verschlossen-Position" zu drehen ist und gleichzeitig in der "GeöffnetPosition" der Schließzapfen nicht komplett aus dem Schließteil herausverlagert wird, sodass die beiden Teile verklemmen, und in der anderen Extremlage in der "Verschlossen-Position" der Schließzapfen nicht so weit in das Schließteil hinein verlagert ist, dass ein Aushebeln des Flügelrahmens und damit ein gewaltsames Öffnen des Fensters wirksam verhindert ist. Das Verklemmen des Schleißzapfens mit dem Schießteil stellt ein Problem im Komfortbereich in der Handhabung des Fensters dar, das mangelnde bzw. geringe Eintauchen des Schließzapfens in das Schließteil ist aber sicherheitsrelevant. Die relativ ungenaue Montage ist auch nicht dadurch vermieden, dass im Auslieferungs- bzw. Montagezustand des Beschlagelementes die Treibstange gegenüber der Stulpschiene lösbar arretiert ist.

Im Zusammenhang mit der vorliegenden Erfindung werden unter dem Begriff "Eckumlenkungen" Eckbeschläge, insbesondere Eckbänder, Stulpwinkel, Stulpschienen und gegebenenfalls Triebstangen oder dergleichen verstanden. Unter den Begriff "Schließzapfen" sind Verschlusselemente aller Ausgestaltung, zum Beispiel Zylinder-, Exzenter-, Pilz- oder 3D-Pilzzapfen, zu subsumieren. Unter dem Begriff "Langteile" werden insbesondere einbaufähige, beispielsweise aus Stulpschienen und Triebstangen zusammengesetzte und gegebenenfalls Verschlusselemente aufweisende Beschlagteile verstanden. Die Eckbeschläge und Langteile können an ihren einem am Rahmenteil benachbart angeordneten Beschlagteil zugeordneten Endbereich Kopplungselemente zur Verkettung der Beschlagteile untereinander aufweisen. Ferner können auch endständige Langteile und auch Eckbeschläge eingesetzt werden, die an mindestens einem Endbereich keine Kopplungsmöglichkeit für ein anderes Beschlagteil aufweisen.

Die DE 20 20043 004 009 U1 offenbart ein ein Kopplungsmittel zur Verbindung einer einer Getriebestange mit einer Riegelstange, wobei das Kopplungsmittel aus einem federnd elastischen Material hergestellt und mit der Getriebestange beispielsweise vernietet, verschraubt oder verklebt ist. Das Kopplungsmittel weist Zähne auf, die in entsprechende Rasterausnehmungen der Riegelstange eingreifen. Eine Verbindung von zwei nacheinander angeordneten Riegelstangen mittels des Kopplungsmittels ist nicht vorgesehen.

Der Erfindung liegt die Aufgabe zugrunde, ein Verfahren und ein Beschlagelement der eingangs genannten Art zu schaffen, das eine relativ genaue Montage unter Vermeidung der zuvor erläuterten Nachteile ermöglicht.

Erfindungsgemäß wird die Aufgabe durch die Merkmale der unabhängigen Ansprüche gelöst.

Die Unteransprüche stellen vorteilhafte Ausgestaltungen der Erfindung dar.

Bei einem Verfahren zur Montage von Beschlagelementen an einem Flügelrahmen eines Fensters oder einer Tür, der im Wesentlichen aus Eckumlenkungen und Längsteilen zusammengesetzt ist, die jeweils mindestens eine Stulpschiene umfassen, an der eine Schließzapfen tragende Treibstange gelagert ist, wobei benachbarte Treibstangen miteinander und zu ihrer Verlagerung mit einer Olive gekoppelt werden, wird zumindest an einer definierten End-Position, die in der einen und/oder anderen Umlaufrichtung am weitesten von der Olive, also der Griffolive, entfernt ist, ein Anschlag für die Stulpschiene und/oder die Treibstange und/oder den Schließzapfen gesetzt.

Dementsprechend werden die Beschlagelemente nicht ausgehend von einer Ecke des Flügelrahmens bzw. der der Ecke zugeordneten Eckumlenkung montiert, sondern beginnend an der entferntesten Stelle zu der Olive, wobei diese Stelle aufgrund der Addition möglicher Fehler in den Abmaßen der Beschlagelemente und/oder deren Positionierung am problematischsten ist, da hier der Schießzapfen eine extreme Position zu dem Schließteil eines Blendrahmens einnehmen kann, die zu einem Verklemmen oder einem ungenügenden Verriegeln führt. Die Position des Anschlags, aus der die optimale Lage des Schließzapfens zu dem Schließteil im montierten Zustand des Fensters resultiert, ist einfach rechnerisch zu ermitteln und mittels moderner Bearbeitungszentren, auf denen beispielsweise eine mechanische Bearbeitung der Flügelrahmen erfolgt, zu markieren. Ein Monteur kann den Anschlag an der vorgesehenen Position festlegen und schlägt entweder die Stulpschiene oder die Treibstange in Abhängigkeit von der Position und Lage des Anschlags sowie dessen Geometrie an. Da in diesem Stadium der Montage die Treibstange mit dem Schließzapfen nur geringfügig gegenüber der Stulpschiene verschiebbar ist, ist der mögliche Lagefehler des Schließzapfens relativ klein. Anschließend wird die Eckumlenkung befestigt, wobei gleichzeitig die Treibstange des endseitigen Längsteils mit der Treibstange der Eckumlenkung derart verbunden wird, dass keine Verlagerung des Schließzapfens erfolgt, insbesondere nicht in einem bestimmten Raster. Ist der Flügelrahmen in seinen Maßen fehlerhaft, kann der Monteur dies leicht optisch feststellen, da die Stulpschiene der Eckumlenkung, die rechtwinklig zu dem Längsteil ausgerichtet ist, nicht in einer entsprechenden Nut eines Rahmenprofils des Flügelrahmens einliegt, also vorsteht. Unabhängig von den Maßen des Flügelrahmens und weitgehend unabhängig von den Toleranzen der Beschlagelemente ist der Schließzapfen in der Nähe des Anschlags mit einer verhältnismäßig hohen Genauigkeit positioniert. Wird die Treibstange bzw. der Schließzapfen gegenüber dem Flügelrahmen durch den Anschlag gehalten, kann unter Umständen eine lösbare Arretierung, die der Hersteller der Beschlagelemente zwischen der Stulpschiene und der Treibstange als Montagehilfe vorsieht, entfallen, wobei auch diese Arretierung mit Spiel behaftet ist, das zu einer ungenauen Positionierung des Schließzapfens führt, insbesondere bei einer Treibstangenverbindung, die eine Verzahnung mit bestimmten Zahnabständen bzw. ein Gewinde mit bestimmter Steigung aufweist.

Zweckmäßigerweise wird der Anschlag kraft- und/oder formschlüssig an einem Rahmenteil angeordnet. Der Anschlag kann beispielsweise an einer optischen Markierung, die an dem Rahmen angebracht ist, ausgerichtet und klemmend befestigt werden. Selbstverständlich ist auch ein Einschrauben, insbesondere eines mit einem Gewinde versehenen Anschlags in das entsprechende Rahmenteil möglich. Hierbei kann der Anschlag nach der Montage der Beschlagelemente dem Rahmenteil wieder entnommen werden oder er verbleibt an dem Rahmenteil und reißt an einer Sollbruchstelle bei einer erstmaligen Verdrehung der Olive ab. In die Nut des Rahmenteils kann auch eine Einfräsung eingebracht werden, in die der Anschlag einsetzbar ist.

Nach einer Weiterbildung wird der Anschlag entnehmbar in eine Bohrung eingesetzt, die von einem Bearbeitungszentrum in eine Nut für die Beschlagelemente gebohrt wird. Selbstverständlich befindet sich die Bohrung in einer Wandung der Nut. Der Anschlag kann ein einfacher Zylinderstift mit oder ohne Pilzkopf sein und wird von dem Monteur in die vorgefertigte Bohrung eingesetzt, um nach der Montage der Beschlagelemente entnommen und wieder verwendet werden zu können. Selbstverständlich kann der Anschlag mit einer Stirnseite der Stulpschiene oder Treibstange zusammenwirken oder in eine entsprechende Öffnung in der Stulpschiene oder Treibstange, die auch für eine andere Verwendung bereits vorgesehen sein kann, eingreifen.

Vorteilhafterweise wird der Anschlag auf einer Bandseite oder benachbart zu der Bandseite gesetzt. Die Bandseite bzw. der oder die bandseitigen Schließzapfen sind in der Regel die problematischsten Bauteile, die bei einer toleranzbedingten "Fehlmontage" bzw. "Schlechtmontage" zu einem Klemmen mit dem blendrahmenseitigen Schließteil führen oder eine ungenügende Zuhaltung bewirken. Beginnt die Montage an dem an der Bandseite gesetzten Anschlag, an den sich in der Regel ein verhältnismäßig langes Längsteil mit mindestens einem Schließzapfen anschließt, das mit einer zugeordneten Eckumlenkung gekoppelt wird, ist eine verhältnismäßig exakte Lage des Schließzapfens sichergestellt. Bei üblichen Fensterabmessungen treten bei einem Montageverfahren nach dem Stand der Technik auf der Bandseite gehäuft Schließ- bzw. Verriegelungsprobleme auf.

In weiterer Ausgestaltung wird zunächst die Stulpschiene und/oder die Treibstange eines bandseitigen Längsteils an dem Anschlag angeschlagen und in die rahmenseitige Nut eingesetzt und anschließend die zugeordnete Eckumlenkung in der Nut montiert, wobei die Treibstange des Längsteils mit der Treibstange der Eckumlenkung verbunden wird, vorzugsweise kraft- und oder stoffschlüssig.

Ein Beschlagelement für einen Flügelrahmen eines Fensters oder einer Tür umfasst eine an einer Stulpschiene verschiebbaren Treibstange, die an zumindest einem Ende ein Mittel zur Kopplung mit einer benachbarten Treibstange aufweist. Das Mittel ist zur kraft- oder stoffschlüssigen Verbindung und/oder zum Verkleben mit der weiteren Treibstange ausgebildet. Aufgrund der Ausgestaltung der Mittel ist ein gegenseitiges Arretieren der miteinander zu verbindenden Treibstangen in einer vorgegebenen Rastposition, die eine Verlagerung des Schließzapfens außerhalb seiner optimalen Soll-Position verhindert. Dies ist beispielsweise bei aus dem Stand der Technik bekannten Verzahnungselementen, die insbesondere mit in Abständen von 1 mm oder 1,5mm zu arretieren sind, nicht ausgeschlossen. Indem eine kraftschlüssige Verbindung zwischen den beiden miteinander zu koppelnden Treibstangen hergestellt wird, kann zum einen ein Toleranzausgleich ermöglicht und zum anderen eine Fehlmontage durch ein vorgegebenes Fixierraster vermieden werden. Die vorgesehene Verbindung von zwei Treibstangen kann durch Kraft- und/oder Stoffschuss oder mittels Verkleben erzielt werden und ist derart zu fertigen, dass ein ungewolltes Verschieben der Treibstange und des damit verbundenen Schließzapfens aus einer vorarretierten Montageposition nur unter einem erheblichen Kraftaufwand möglich ist.

Vorteilhafterweise umfasst das Mittel Klemmbacken, die entweder durch Pressen oder Federbeaufschlagung mit einem Zapfen zu verbinden sind. Verpressbare Klemmbacken können beispielsweise in der Soll-Lage der Treibstange bzw. des Schießzapfens mit einem Werkzeug derart verformt werden, dass sie die benachbarte Treibstange zuverlässig haltern. Es ist auch möglich, den Klemmbacken Federn für eine Arretierstellung zuzuordnen.

Um die Montage zu vereinfachen, ist ein bei einem Fügen von zwei Treibstangen beaufschlagbarer Federmechanismus zur Herstellung einer Wirkverbindung zwischen den Klemmbacken und dem Zapfen vorgesehen. In alternativer Ausgestaltung umfassen die Mittel einen bei der Herstellung einer Verbindung zwischen zwei benachbarten Treibstangen wirksamen Klebstoff. Zweckmäßigerweise umfassen die Mittel in weiterer alternativer Ausgestaltung Nieten, Schrauben oder dergleichen.

Vorzugsweise weist das Beschlagelement einen unterseitigen Anschlag auf. Der Anschlag kann als zylindrischer Zapfen ausgebildet sein und in eine entsprechende rahmenseitige Bohrung eingesetzt werden. Ist der Anschlag an einem beweglichen Teil des Beschlagelementes angeordnet, also beispielsweise der Treibstange bzw. dem Schließzapfen zugeordnet, dann kann es eine Sollbruchstelle aufweisen, um bei einer ersten Verdrehung der Griffolive abzureißen.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand eines Ausführungsbeispieles unter Bezugnahme auf die zugehörige Zeichnung näher erläutert. Es zeigt:
- Fig. 1: eine schematische Darstellung von Beschlagelementen in einer Übersicht und

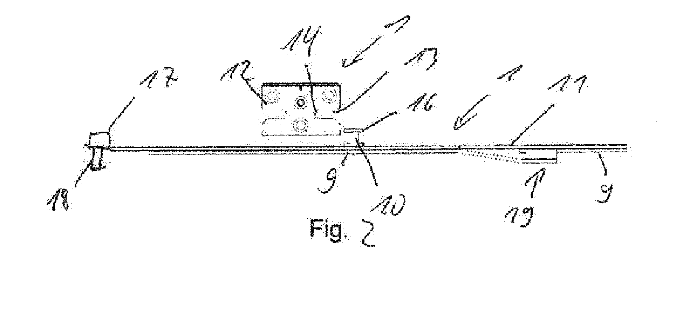

- Fig. 2: eine vergrößerte Teildarstellung der Beschlagelemente nach Fig. 1.

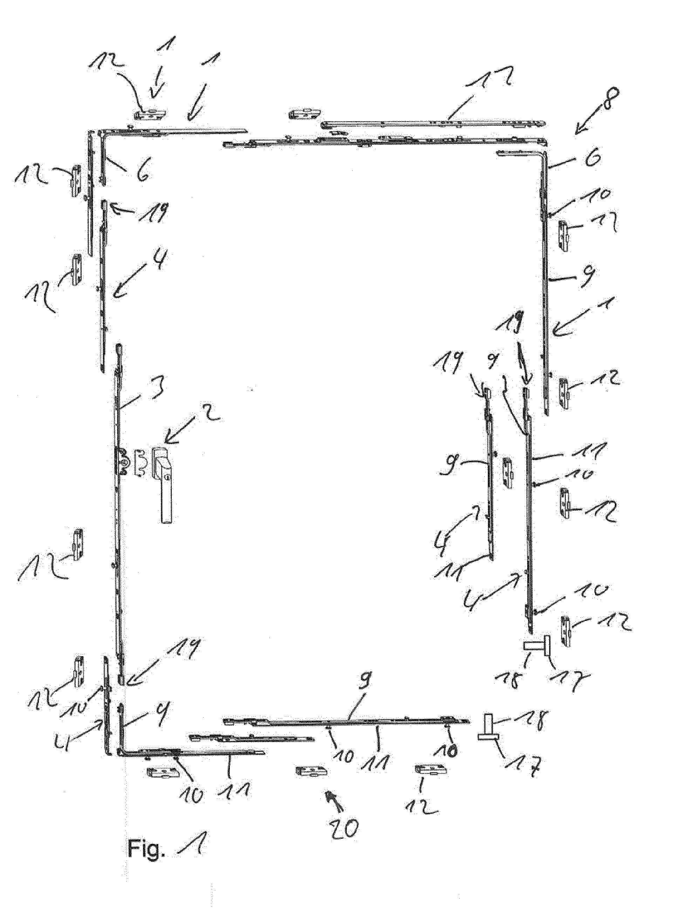

Die Darstellung nach Fig. 1 zeigt zur besseren Übersicht nur einen Teil der an einem Fenster oder einer Tür verwendeten Beschlagelemente 1, insbesondere fehlen Scheren, die bei einem Dreh-Kipp-Beschlag vorgesehen sind, sowie Ecklager zur Verbindung eines Flügelrahmens mit einem Blendrahmen an einer Bandseite.

Im Wesentlichen umfassen die dargestellten Beschlagelemente 1 an einer Verschlussseite 5 eine Griffolive 2 an einem sich längserstreckenden Getriebeteil 3, dem beidseitig Längsteile 4 zugeordnet sind, an die sich ober- und unterseitig Eckumlenkungen 6 anschließen. An die auf der Verschlussseite 5 angebrachten Eckumlenkungen 6 schließen sich ober- und unterseitig Längsteile 4 an, wobei das oberseitige Längsteil 4 mit einer Eckumlenkung 6, die sich von einer Oberseite 7 in Richtung einer Bandseite 8 erstreckt, verbunden ist, an die sich wiederum ein bandseitiges Längsteil 4 anschließt. Die Eckumlenkungen 6 und die Längsteile 4 umfassen Treibstangen 9, an denen Schließzapfen 10 angeordnet sind, sowie die Treibstangen 9 verschiebbar lagernde Stulpschienen 11. Die Längsteile 4 und Eckumlenkungen 6 sind in Nuten eines Flügelrahmens eines Fensters oder einer Tür angeordnet, wobei benachbarte Stulpschienen 11 idealerweise mit ihren Stirnseiten in gegenseitiger Berührung aneinander liegen und benachbarte Treibstangen 9 miteinander verbunden sind, damit bei einer Drehung der Griffolive 2 eine geradlinige Verschiebung der Schließzapfen 10 erfolgt.

Um die Beschlagelemente 1 an die Maße eines zu bestückenden Flügelrahmens anzupassen, sind einige Beschlagelemente 1 variabel zu kürzen und andere Beschlagelemente 1 in unterschiedlichen Rasterlängen verfügbar. Vor der Montage ist die Treibstange 9 relativ zur Stulpschiene 11 lösbar fixiert, wobei zwischen den beiden Einzelteilen ein axiales Spiel herrscht, insbesondere der Schließzapfen 10 ist mit der Treibstange 9 gegenüber der Stulpschiene 11 verlagerbar.

Um den Flügelrahmen gegenüber einem Blendrahmen zu fixieren, trägt der Blendrahmen an festgelegten Positionen Schließteile 12, die jeweils mindestens eine Nut 13 aufweisen, wobei der Schließzapfen 10 in einer verriegelten Stellung möglichst weit in die Nut 13 eintauchen soll, um ein gewaltsames Aushebeln im Fall eines Einbruchs zu verhindern. Die Eintauchtiefe des Schließzapfens 10 ist durch das Nutende 14 begrenzt. Schlägt der Schließzapfen 10 an Nutende 14 an, lässt sich die Griffolive 2 nicht weiter verdrehen und nimmt unter Umständen eine Stellung ein, die optisch als Zwischenstellung erscheint, wobei die in Reihe angeordneten Schließzapfen 10 bei einer tief in die Nuten 13 der zugeordneten Schließteile 12 eintauchen. Besonders problematisch sind toleranzbedingte oder montagefehlerbehaftete Stellungen, in denen der Schließzapfen 10 in der geöffneten Stellung der Griffolive 2 nicht vollständig aus der Nut 13 des zugeordneten Schließteils 12 herausverschoben ist, wodurch ein Klemmen bei einem Verschwenken des Flügelrahmens relativ zu dem Blendrahmen stattfindet, das durch einen entsprechenden Widerstand haptisch wahrnehmbar ist, oder der Schließzapfen 10 in der geschlossenen Stellung der Griffolive 2 nicht weit genug in die Nut 13 eintaucht, um das Aushebeln und damit ein gewaltsames Öffnen des Flügelrahmens wirksam zu verhindern.

Damit ein Schließzapfen 10 an einem Ende 15 der miteinander verbundenen Treibstangen 9, also entfernt zu der Griffolive 2, eine optimale Position einnimmt und damit auch bei einem montierten Fenster möglichst optimal mit dem zugeordneten Schleißteil 12 zusammenwirkt, sodass eine störungsfreie Eintauchtiefe des Schließzapfens 10 mit seinem Pilzkopf 16 in der Nut 13 des Schließteils 12 erreichbar ist, wird ein Anschlag 17 gesetzt, der mit der Stulpschiene 11 und/oder der Treibstange 9 zusammenwirkt. Selbstverständlich kann der Anschlag 17 den Schließzapfen 10 während der Montage auch unmittelbar fixieren. Zur Befestigung des Anschlags 17 an dem Flügelrahmen kann an einer zu berechnenden Position ein Loch gebohrt werden, in das ein Zylinderzapfen 18 des Anschlags 17, vorzugsweise entnehmbar, eingesteckt wird. Selbstverständlich kann der Anschlag auch mit einem Gewinde versehen und in den Flügelrahmen eingeschraubt sein. Durch den Anschlag wird das endseitige Längsteil 4 beispielsweise über seine Stulpschiene 11 oder Treibstange 9, die gegebenenfalls einen Eingriff für den Anschlag 17 aufwiesen, in definierter Lage gehalten. Anschließend wird die sich an das Längsteil 4 anschließende Eckumlenkung 6 montiert, wobei die Treibstange 9 des Längsteils 4 vorzugsweise Mittel 19 aufweist, die eine kraftschlüssige Verbindung mit der Treibstange 9 der Eckumlenkung 6 herstellen, um eine Verschiebung der Treibstangen 9 und damit der Schließzapfen 10 aus der optimalen Montageposition heraus in eine Extremlage zu verhindern. Der Monteur bekommt durch den Anschlag 17 eine Hilfe bei der Positionierung des jeweils endseitigen Längsteils 4. Die daran anschließenden Eckumlenkungen 6 sind relativ einfach und sicher sowie positionsgenau an den entsprechenden Ecken des Flügelrahmens anzuordnen und das zwischen zwei Eckumlenkungen 6 vorhandene Längsteil 4 ist aufgrund der lagegenauen Positionierung der beiderseitigen Eckumlenkungen 6 ebenfalls verhältnismäßig exakt ausgerichtet.

Neben einem separaten Anschlag 17 kann selbstverständlich auch ein Anschlag 17 auf der Unterseite 20 der Beschlagelemente 1 vorgesehen sein, beispielsweise in Form eines Zylinderzapfens, und in eine entsprechende rahmenseitige Bohrung eingesetzt werden. Wenn der Anschlag 17 an unmittelbar an dem Schließzapfen 10 oder der Treibstange 9 befestigt ist, wird er mit einer Sollbruchstelle versehen, damit er bei einer ersten Verdrehung der Griffolive 2 abreißt.

Die Mittel 19 zur kraftschlüssigen Kopplung von zwei benachbarten Treibstangen 9 können beispielsweise als Klemmbacken an der einen Treibstange 9 ausgebildet sein, die entweder durch Pressen oder Federbeaufschlagung mit einem endseitigen Zapfen der anderen Treibstange 9 zu verbinden sind. Selbstverständlich kann auch eine Klebeverbindung oder dergleichen zwischen den beiden Treibstangen 9 hergestellt werden. Auch die verzahnte Kopplung, wie aus dem Stand der Technik bekannt, ist als Verbindung nicht auszuschließen, insbesondere wenn ihre negative Wirkung auf die Positionierung des Schließzapfens 10 durch den Anschlag 17 kompensierbar ist.

### Bezugszeichenliste

- 1.: Beschlagelement
- 2.: Griffolive
- 3.: Getriebeteil
- 4.: Längsteil
- 5.: Verschlussseite
- 6.: Eckumlenkung
- 7.: Oberseite
- 8.: Bandseite
- 9.: Treibstange
- 10.: Schließzapfen
- 11.: Stulpschiene
- 12.: Schließteil
- 13.: Nut
- 14.: Nutende
- 15.: Ende
- 16.: Pilzkopf
- 17.: Anschlag
- 18.: Zylinderzapfen
- 19.: Mittel
- 20.: Unterseite

## Patentansprüche

1. Verfahren zur Montage von Beschlagelementen (1) an einem Flügelrahmen eines Fensters oder einer Tür, der im Wesentlichen aus Eckumlenkungen (6) und Längsteilen (4) zusammengesetzt ist, die jeweils mindestens eine Stulpschiene (11) umfassen, an der eine Schließzapfen (10) tragende Treibstange (9) gelagert ist, wobei benachbarte Treibstangen (9) miteinander und zu ihrer Verlagerung mit einer Griffolive (2) gekoppelt werden, **dadurch gekennzeichnet, dass** zumindest an einer definierten End-Position, die in der einen und/oder anderen Umlaufrichtung am weitesten von der Griffolive (2) entfernt ist, ein Anschlag (17) für die Stulpschiene (11) und/oder die Treibstange (9) und/oder den Schließzapfen (10) gesetzt wird.

2. Verfahren nach Anspruch 1, **dadurch gekennzeichnet, dass** der Anschlag (17) kraft- und/oder formschlüssig an einem Rahmenteil angeordnet wird.

3. Verfahren nach Anspruch 1 oder 2, **dadurch gekennzeichnet, dass** der Anschlag (17) entnehmbar in eine Bohrung eingesetzt wird, die von einem Bearbeitungszentrum in eine Nut für die Beschlagelemente (1) gebohrt wird.

4. Verfahren nach einem der Ansprüche 1 bis 3, **dadurch gekennzeichnet, dass** der Anschlag (17) auf einer Bandseite (8) oder benachbart zu der Bandseite (8), insbesondere an einer Unterseite (20) des Flügelrahmens, gesetzt wird.

5. Verfahren nach einem der Ansprüche 1 bis 4, **dadurch gekennzeichnet, dass** zunächst die Stulpschiene (17) und/oder die Treibstange (9) eines bandseitigen Längsteils (4) an dem Anschlag (17) angeschlagen und in die rahmenseitige Nut eingesetzt und anschließend die zugeordnete Eckumlenkung (6) in der Nut montiert wird, wobei die Treibstange (9) des Längsteils (4) mit der Treibstange (9) der Eckumlenkung (6) verbunden wird, vorzugsweise kraft- und oder stoffschlüssig.

6. Verfahren nach einem der Ansprüche 1 bis 5, **dadurch gekennzeichnet, dass** die sich abschnittsweise über die Bandseite (8) und eine Oberseite (7) des Flügelrahmens erstreckende Eckumlenkung (6) mittels eines Längsteils (4) mit der sich abschnittsweise über die Oberseite und eine Verschlussseite (5) des Flügelrahmens erstreckenden Eckumlenkung (6) gekoppelt wird, die wiederum mittels eines Längsteils (4) mit einem sich längserstreckenden Getriebeteil (3), das der Griffolive (2) zugeordnet ist, verbunden wird.

7. Verfahren nach einem der Ansprüche 1 bis 4, **dadurch gekennzeichnet, dass** zunächst die Stulpschiene (17) und/oder die Treibstange (9) eines unterseitigen Längsteils (4) an dem Anschlag (17) angeschlagen und in die rahmenseitige Nut eingesetzt und anschließend die zugeordnete Eckumlenkung (6), die sich abschnittsweise über die Unterseite (20) und die Verschlussseite (5) des Flügelrahmens erstreckt, in der Nut montiert wird, wobei die Treibstange (9) des Längsteils (4) mit der Treibstange (9) der Eckumlenkung (6) verbunden wird, vorzugsweise kraft- und oder stoffschlüssig.

8. Verfahren nach einem der Ansprüche 1 bis 7, **dadurch gekennzeichnet, dass** die sich abschnittsweise über die Unterseite (20) und die Verschlussseite (5) des Flügelrahmens erstreckende Eckumlenkung (6) mittels eines Längsteils (4) mit einem sich längserstreckenden Getriebeteil (3), das der Griffolive (2) zugeordnet ist, verbunden wird.

9. Beschlagelement für einen Flügelrahmen eines Fensters oder einer Tür mit einer an einer Stulpschiene (11) verschiebbaren Treibstange (9), die an zumindest einem Ende ein Mittel zur Kopplung mit einer benachbarten Treibstange aufweist, **dadurch gekennzeichnet, dass** das Mittel (19) zur kraft- oder stoffschlüssigen Verbindung oder zum Verkleben mit der weiteren Treibstange (9) ausgebildet ist.

10. Beschlagelement nach Anspruch 9, **dadurch gekennzeichnet, dass** das Mittel (19) Klemmbacken umfasst, die entweder durch Pressen oder Federbeaufschlagung mit einem Zapfen zu verbinden sind.

11. Beschlagelement nach Anspruch 10, **dadurch gekennzeichnet, dass** ein bei einem Fügen von zwei Treibstangen (9) beaufschlagbarer Federmechanismus zur Herstellung einer Wirkverbindung zwischen den Klemmbacken und dem Zapfen vorgesehen ist.

12. Beschlagelement nach Anspruch 9, **dadurch gekennzeichnet, dass** die Mittel (19) einen bei der Herstellung einer Verbindung zwischen zwei benachbarten Treibstangen (9) wirksamen Klebstoff umfassen.

13. Beschlagelement nach Anspruch 9, **dadurch gekennzeichnet, dass** die Mittel (19) Nieten, Schrauben oder dergleichen umfassen.

14. Beschlagelement nach Anspruch 9, **dadurch gekennzeichnet, dass** es einen unterseitigen Anschlag (17) aufweist.
